(19) Europäisches Patentamt
European Patent Office
Office européen des brevets

(11) Veröffentlichungsnummer: **0 249 960**
**A2**

(12) **EUROPÄISCHE PATENTANMELDUNG**

(21) Anmeldenummer: **87108693.0**

(22) Anmeldetag: **16.06.87**

(51) Int. Cl.4: **C08G 77/06** , C10M 107/00

(30) Priorität: **19.06.86 DE 3620503**

(43) Veröffentlichungstag der Anmeldung:
**23.12.87 Patentblatt 87/52**

(84) Benannte Vertragsstaaten:
**AT BE DE ES FR GB IT NL SE**

(71) Anmelder: **WACKER-CHEMIE GMBH**
**Prinzregentenstrasse 22**
**D-8000 München 22(DE)**

(72) Erfinder: **Riederer, Manfred, Dr.**
**Kreislerweg 4**
**D-8263 Burghausen(DE)**
Erfinder: **Piehler, Martin**
**Hintermehring 3**
**D-8261 Mehring(DE)**

(54) **Stabilisierte Organopolysiloxanöle.**

(57) Die Erfindung betrifft ein Verfahren zum Stabilisieren von in den endständigen Einheiten Triorganosiloxy-Gruppen enthaltenden Organopolysiloxanölen, in dem man die genannten Organopolysiloxanöle mit Verbindungen der Formel

$R'_3SiX$ oder $(R'_3Si)_2Y$

in Kontakt bringt, wobei in den obigen Formeln

R' gleiche oder verschiedene,gegebenenfalls halogenierte Kohlenwasserstoffreste mit 1 bis 18 Kohlenstoffatomen, und X und Y die in Anspruch 1 angegebenen Bedeutungen haben.

Die so stabilisierten Öle eignen sich als Kraftübertragungsöle, insbesondere in Visco-Kupplungen.

EP 0 249 960 A2

## Stabilisierte Organopolysiloxanöle

Die Erfindung betrifft ein Verfahren zur Herstellung stabilisierter Organopolysiloxanöle sowie die Verwendung solcher Organopolysiloxane als Kraftübertragungsöle, insbesondere in Kupplungen, wie beispielsweise Visco-Kupplungen.

Visco-Kupplungen sind mit wechselseitig ineinandergreifenden, um eine gemeinsame Achse drehbaren Scheiben versehene Kupplungen, die jeweils in einem Gehäuse mit mit den Reibflächen in Berührung stehender viskoser Flüssigkeit angeordnet sind. Solche Kupplungen werden beispielsweise in Differentialsperren und Zwischenachs-Differentialgetrieben von Landfahrzeugen verwendet und sind u. a. in DE-OS 21 35 791 (offengelegt am 03. Februar 1972, A.P.R. Rolt et al., Harry Ferguson Research Ltd., Coventry, England) beschrieben. Als Bestandteile von Zwischenachs-Differentialgetrieben ermöglichen Visco-Kupplungen die positive oder negative Drehmomentübertragung von der Antriebsachse auf die andere(n) Achse(n). Das jeweils übertragene Drehmoment hängt vom Drehzahlunterschied zwischen den entsprechenden Räder(paare)n ab. So kann beispielsweise das Durchdrehen der Antriebsräder beim Start des Fahrzeugs verhindert werden. Beim Ansprechen der Visco-Kupplung ist die mit den Reibflächen in Berührung stehende viskose Flüssigkeit erheblichen Scherkräften ausgesetzt, wobei sie sich auf Temperaturen von über 250° C erwärmen kann. Handelsübliche Silikonöle sind für diesen Zweck nur bedingt einsatzfähig.

Aufgabe der Erfindung war es, Siloconöle herzustellen, deren Viskosität sich bei 250° C über einen längeren Zeitraum nicht merklich ändert. Eine weitere Aufgabe der vorliegenden Erfindung war es, Siliconöle herzustellen, die unter den Arbeitsbedingungen der Visco-Kupplung keine bei diesem Druck und dieser Temperatur gasförmige Spaltprodukte bilden. Die genannten Aufgaben werden durch die vorliegende Erfindung dadurch gelöst, daß man in den endständigen Einheiten Triorganosiloxy-Gruppen enthaltende Organopolysiloxanöle stabilisiert, indem man die genannten Organopolysiloxanöle mit Verbindungen der Formel

$R'_3SiX$ oder $(R'_3Si)_2Y$

in Kontakt bringt, wobei in den obigen Formeln R', X und Y die weiter unten für die Reste R', X und Y in den Formeln (II) bzw. (III) angegebenen Bedeutungen haben.

Das erfindungsgemäße Verfahren beruht auf der Nachbehandlung von an sich bekannten Siliconölen, z. B. denen der Formel

$$R_3Si-O-\left[\begin{array}{c}R\\|\\-Si-O\\|\\R\end{array}\right]_n-SiR_3 \qquad (I)$$

mit Verbindungen der Formel

$R'_3SiX$ (II) bzw. $(R'_3Si)_2Y$ (III),

wobei in den obigen Formeln (I), (II) und (III)

R und R' gleiche oder verschiedene gegebenenfalls halogenierte Kohlenwasserstoffreste mit 1 bis 18 Kohlenstoffatomen,

n eine ganze Zahl von 1 bis 3000

X ein Halogenatom, ein Wasserstoffatom, eine Hydroxylgruppe oder ein über ein Sauerstoff-oder Stickstoffatom an das in der Formel (II) bezeichnete Siliciumatom gebundener einwertiger, aus Stickstoff-, Wasserstoff-, Sauerstoff-und 0 bis 6 Kohlenstoffatomen aufgebauter Rest,

Y einen zweiwertigen Rest, nämlich ein Sauerstoffatom, eine Gruppe der Formel NH, NR", oder ein über Sauerstoff-und/ oder Stickstoffatome an die in der Formel (III) bezeichneten Siliciumatome gebundener zweiwertiger, aus Stickstoff-, Wasserstoff-, Sauerstoff-und 0 bis 6 Kohlenstoffatomen aufgebauter Rest,

R" einen Kohlenwasserstoffrest mit 1 bis 8 Kohlenstoffatomen, bedeuten.

Beispiele für Reste R und R' sind Alkylreste, wie der Methyl-, Ethyl-, n-Propyl-, i-Propyl-, n-Butyl-, i-Butyl-, t-Butyl-, n-Pentyl-, neo-Pentylrest, Hexyl-, Heptyl-, Octyl-, Decyl-und Octadecylreste; Arylreste, wie der Phenyl-und der Naphtylrest; Aralkylreste, wie der Benzyl-, 1-Phenylethyl-und der 2-Phenylethylrest; Alkarylreste, wie o-, m-, p-Tolylreste und Xylylreste; Ararylreste, wie o-, m-, p-Diphenylreste; halogenierte Kohlenwasserstoffreste, wie o-, m-, p-Chlorphenylreste, o-, m-, p-Bromphenylreste, 3,3,3-Trifluorpropylreste, der 1,1,1,3,3,3-Hexafluor-2-propylrest, Heptafluorisopropylrest und Heptafluor-n-propylrest.

Bevorzugt als Reste R und R′ sind gegebenenfalls fluorierte Kohlenwasserstoffreste, aliphatisch ungesättigte Reste ausgenommen, mit 1 bis 8 Kohlenstoffatomen. Besonders bevorzugt als Reste R und R′ sind der Mehtyl-und der Phenylrest.

Bevorzugt als Rest X ist der Hydroxylrest.

Beispiele für zweiwertige Reste Y sind Reste der Formel

$$-O-,\ -NH-,\ >N-\underset{}{\overset{O}{\overset{\|}{C}}}-CH_3,\ -NH-\underset{O}{\underset{\|}{C}}-NH-,\ >N-\underset{O}{\underset{\|}{C}}-NH_2$$

Beispiele für bevorzugte Verbindungen der Formel (II) sind Triphenylsilanol, Methyldiphenylsilanol, Dimethylphenylsilanol, Trimethylsilanol.

Beispiele für bevorzugte Verbindungen der Formel (III) sind Hexamethyldisiloxan, Hexaphenyldisiloxan, Hexamethyldisilazan, Hexaphenyldisilazan, Tetramethyldiphenyldisilazane, Trimethyltriphenyldisilazane, Dimethyltetraphenyldisilazane, Methylpentaphenyldisilazan, Pentamethylphenyldisilazan, bis - Trimethylsilylacetamid, N,N′ -bis-Trimethylsilylharnstoff.

Von den Verbindungen der Formeln (II) und (III) ist für die erfindungsgemäße Nachbehandlung der genannten Siliconöle, insbesondere im Hinblick auf die Verwendung der so stabilisierten Silikonöle in Visco-Kupplungen, Hexamethyldisilazan besonders bevorzugt.

Für die Verwendung der erfindungsgemäß nachbehandelten Silikonöle in Visco-Kupplungen ist es vorteilhaft, wenn diese Öle vor der erfindungsgemäßen Nachbehandlung eine Viskosität von $1000 mm^2/s$ bis $500\,000\ mm^2/s$, insbesondere von $5000\ mm^2/s$ bis $200\,000\ mm^2/s$, jeweils gemessen bei 25° C, besitzen. Die Viskositäten der im erfindungsgemäßen Verfahren eingesetzten Silikonöle der Formel (I) ändern sich während der Nachbehandlung nur geringfügig, im allgemeinen um nicht mehr als 10 %, bezogen auf die Viskositäten vor der Behandlung.

Das erfindungsgemäße Verfahren wird vorzugsweise bei Temperaturen von 80 bis 130 °C, insbesondere von 105 bis 110 °C durchgeführt.

Das erfindungsgemäße Verfahren kann beim Druck der umgebenden Atmosphäre, also 0,102 MPa (abs.) oder etwa 0,102 MPa (abs.), es kann aber auch bei höheren oder niedrigeren Drükken durchgeführt werden. Drücke von 900 bis 1200hPa, insbesondere von 1000 bis 1050 hPa, sind bevorzugt.

Das erfindungsgemäße Verfahren wird vorzugsweise während einer Dauer von 1 bis 24h, insbesondere von 8 bis 12 h durchgeführt.

Als erfindungsgemäß nachzubehandelnde und nach dieser Nachbehandlung in Visco-Kupplungen einsetzbare Silikonöle sind Öle der Formel (IV) besonders bevorzugt:

$$Ph_3Si-O-\left[\begin{matrix}CH_3\\ |\\ Si-O\\ |\\ Ph\end{matrix}\right]_x---\left[\begin{matrix}Ph\\ |\\ Si-O\\ |\\ Ph\end{matrix}\right]_y---\left[\begin{matrix}CH_3\\ |\\ Si-O\\ |\\ CH_3\end{matrix}\right]_z Si-Ph_3 \qquad (IV),$$

worin Ph für einen Phenylrest steht, x, y und z jeweils ganze Zahlen von 0 bis 3000 sind; vorzugsweise haben an der Summe x + y + z

x einen Anteil von 0 % bis 20 %, insbesondere von 7 % bis 8 %;

y einen Anteil von 0 % bis 20 %, insbesondere von 7 % bis 8 %;

z einen Anteil von 80 % bis 100 %, insbesondere von 85 % bis 95 %.

Obwohl in den Formeln (I) und (IV) nicht explizit ausgedrückt, können bis zu 5 % der Diorganosiloxaneinheiten durch Einheiten der Formel $SiO_{4/2}$ oder Monoorganosiloxaneinheiten der Formel $RSiO_{3/2}$ (in Formel (I) ) bzw. $CH_3SiO_{3/2}$ oder $PhSiO_{3/2}$ (in Formel (IV) ) ersetzt sein; diese Einheiten sind meist nur als mehr oder weniger schwer vermeidbare Verunreinigungen in den Organopolysiloxanen der Formeln (I) und (IV) vorhanden. Ebenso enthalten die Organopolysiloxane der Formeln (I) und (IV), obwohl die Formeln dies nicht ausdrücken, durch ihr Herstellungsverfahren bedingte geringe Mengen an direkt an Siliciumatome

gebundenen Hydroxylgruppen, im allgemeinen in einer Konzentration von ca. 10 bis 1000 ppm bezogen auf Organopolysiloxan der Formel (I) bzw. (IV). Es ist nicht ausgeschlossen, daß die durch das erfindungsgemäße Verfahren erzielte Stabilisierung der genannten Organopolysiloxane ganz oder teilweise auf einer wesentlichen Verminderung der in diesen vorliegenden Si-gebundenen Hydroxylgruppen beruht.

Im erfindungsgemäßen Verfahren werden Verbindungen der Formel (II) vorzugsweise in Mengen von 0,5 Gewichtsprozent bis 1 Gewichtsprozent, insbesondere von 0,75 Gewichtsprozent bis 0,85 Gewichtsprozent, Verbindungen der Formel (III) vorzugsweise in Mengen von 0,1 Gewichtsprozent bis 0,5 Gewichtsprozent, insbesondere von 0,3 Gewichtsprozent bis 0,4 Gewichtsprozent, jeweils bezogen auf das Gewicht des zu stabilisierenden Organopolysiloxanöls, eingesetzt.

Vorzugsweise wird das erfindungsgemäße Verfahren ohne Gegenwart eines Lösungsmittels durchgeführt.

Je nach der Wahl der im erfindungsgemäßen Verfahren einzusetzenden Verbindungen (II) und/oder (III) kann es ratsam sein, das stabilisierte Organopolysiloxan von niedrigsiedenden Nebenprodukten und/oder von überschüssiger Verbindung der Formel (II) und/oder (III) zu befreien. Dies kann vorzugsweise destillativ geschehen, insbesondere bei Temperaturen von 100 bis 110 °C und Drücken unter 1kPa (abs.).

Das erfindungsgemäße Verfahren kann absatzweise, teilkontinuierlich oder kontinuierlich durchgeführt werden. Die kontinuierliche Fahrweise ist bevorzugt.

In den nachfolgenden Beispielen beziehen sich, falls nicht anders aufgeführt, alle Mengenbezeichnungen auf das Gewicht. Angaben in Gewichtsprozent beziehen sich auf das Gewicht des eingesetzten Organopolysiloxanöls. Die Beispiele wurden, soweit nicht anders angegeben, jeweils beim Druck der umgeben den Atmosphäre, also 1020 hPa (abs.) oder etwa 1020 hPa (abs.) durchgeführt. Das stabilisierte Organopolysiloxan wurde jeweils 0,5 h lang bei 150° C und einem Druck von weniger als 100 Pa von leichtsiedenden Komponenten befreit.

## Beispiele

Eingesetzte Siliconöle:

Siliconöl A: Trimethylsiloxy-endblockiertes Polydimethylsiloxan einer Viskosität von 60 000 $mm^2s^{-1}$ bei 25° C (käuflich erhältlich unter der Bezeichnung AK 60 000 bei der Wacker-Chemie GmbH,D-8000 München);

Siliconöl B : Triphenylsiloxy-endblockiertes Polymethylphenylsiloxan mit einer Viskosität von 60 000 $mm^2s^{-1}$ bei 25° C, dessen Diorganosiloxaneinheiten zu 7 % Methylphenylsiloxan-und zu 93 % Dimethylsiloxaneinheiten sind, hergestellt wie folgt:

Zu einer Mischung von 500 g eines $\alpha,\omega$-Dihydroxypolydiorganosiloxans einer Viskosität von 175 $mm^2s^{-1}$ bei 25° C, dessen Diorganosiloxaneinheiten zu 7 Mol% Methylphenylsiloxan-und zu 93 Mol% Dimethylsiloxaneinheiten sind, und 4 g Triphenylsilanol wurde 400 ppm 3-[Tris(trimethylsiloxy)silyl-]n-propyl-tri-n-butylphosphoniumhydroxid (hergestellt gemäß DE-OS 35 04 185) zugegeben. Die so erhaltene Mischung wurde bei 0,1 Pa (abs.) und 130° C 30 min lang gerührt, anschließend bei 1020 hPa(abs.) 60 min lang bei 150° C belassen. Nach Abdestillieren der flüchtigen Bestandteile bei 0,1 Pa (abs.) und bis zu 200° C wurde ein klares Öl erhalten.

Siliconöl C: Triphenylsilyl-endblockiertes Polymethylphenylsiloxan einer Viskosität von 100 000 $mm^2s^{-1}$ bei 25° C, dessen Diorganosiloxaneinheiten zu 14 Mol% Methylphenylsiloxan-und zu 86 Mol% Dimethylsiloxaneinheiten sind; hergestellt wie Siliconöl B, mit der Abänderung, daß
als $\alpha,\omega$-Dihydroxypolydiorganosiloxan eines mit einer Viskosität von 200 $mm^2s^{-1}$ bei 25° C eingesetzt wurde, dessen Diorganosiloxaneinheiten zu 14 Mol% Methylphenyl-und zu 86 Mol% Dimethylsiloxaneinheiten sind und daß statt 4 g nur 3,5 g Triphenylsilanol verwandt wurde. Man erhielt ein klares Öl;

Siliconöl D : Triphenylsilyl-endblockiertes Polymethylphenylsiloxan einer Viskosität von 60 000 $mm^2s^{-1}$ bei 25° C, dessen Diorganosiloxaneinheiten zu 7 Mol% Diphenylsiloxan-und zu 93 Mol% Dimethylsiloxaneinheiten sind;
hergestellt wie Siliconöl B, mit der Abänderung, daß als $\alpha,\omega$-Dihydroxypolydiorganosiloxan eines mit einer Viskosität von 250 $mm^2s^{-1}$ bei 25° C eingesetzt wurde, dessen Diorganosiloxaneinheiten zu 7 Mol% Diphenyl-und zu 93 Mol% Dimethylsiloxaneinheiten sind. Erhalten wurde ein klares Öl.

Die Siliconöle A, B, C und D enthalten ca. 100 ppm Si-gebundene Hydroxylgruppen.

Beispiele 1 bis 4: Batch-Verfahren:

Die Siliconöle A (Beispiel 1), B (Beispiel 2), C (Beispiel 3) und D (Beispiel 4) wurden mit je 0,1 Gew.% Hexamethyldisilazan vermischt und in jeweils einem geschlossenen Reaktionskolben mit Druckausgleich 72 h lang bei 100° C gerührt. Bei 150° C und 0,1 Pa Druck wurden die flüchtigen Komponenten während ca. 30 min abdestilliert. In den so erhaltenen Ölen waren durch IR-Spektroskopie keine Si-OH-Gruppen mehr nachzuweisen.

Beispiele 5 bis 8: Batch-Verfahren:

Die Siliconöle A (Beispiel 5), B (Beispiel 6), C (Beispiel 7) und D (Beispiel 8) wurden mit je 0,4 Gew.% N,N-Bistrimethylsilylacetamid (BSA) bei Raumtemperatur in je einem geschlossenen Reaktionskolben mit Druckausgleich 1 h lang gerührt. Danach wurden bei 150° C und 0,1 Pa die flüchtigen Komponenten während ca. 30 min abdestilliert. In den so erhaltenen Ölen waren IR-spektroskopisch keine Si-OH-Gruppen mehr nachzuweisen.

Beispiele 9 bis 12: Kontinuierliches Verfahren:

Die Siliconöle A (Beispiel 9), B (Beispiel 10), C (Beispiel 11) und D (Beispiel 12) wurden mit jeweils 0,1 Gew.% N,N-Bistrimethylsilylacetamid (BSA) kontinuierlich durch einen bei 150° C und 130 Pa (abs.) betriebenen Kneter gepumpt. Die mittlere Verweilzeit betrug ca. 1 h. In den so erhaltenen Ölen ließen sich IR-spektroskopisch keine Si-OH-Gruppen mehr nachweisen.

Beispiele 13 bis 16: Kontinuierliches Verfahren:

Beispiele 9 bis 12 wurden wiederholt mit der Abänderung, daß statt BSA jeweils 0,4 Gew.% N,N'-Bistrimethylsilylharnstoff zudosiert wurde. In den so erhaltenen Ölen ließen sich IR-spektroskopisch keine Si-OH-Gruppen mehr nachweisen.

Beispiel 17: Prüfung der Stabilität gegenüber Viskositätsänderungen:

Die unten genannten Öle wurden über trockenem Stickstoff 4 h lang bei 250° C behandelt und die Viskositätsverläufe während dieser Zeit mittels eines an einem Schreiber angeschlossenen digitalen Brookfield-Viskosimeter gemessen. Die Ergebnisse sind in der folgenden Tab. 1 aufgeführt.

Tab. 1: Viskositätsabfall nach 4 h bei 250° C.

| Silicontype | | Viskositätsabfall |
|---|---|---|
| Siliconöl A | unbehandelt | 25 % |
| Siliconöl A | stabilisiert gemäß Beispiel 1 | 5 % |
| Siliconöl D | unbehandelt | 20 % |
| Siliconöl D | stabilisiert gemäß Beispiel 4 | 0 % |

Beispiel 18: Verwendung in einer Viscokupplung:

Verschiedene Siliconöle wurden bei 25° C bis zu einem Füllgrad von 85 Volumenprozent in eine 40 Lamellen (Scheiben) enthaltende Visco-Kupplung gefüllt. Der mittlere Lamellenabstand betrug 0,5 mm. Die Antriebswelle der Kupplung wurde mit einem Motor angetrieben. Die Drehzahl betrug 200 $s^{-1}$. Die andere Welle blieb starr (Drehzahl = 0); an ihr war ein Drehmomentaufnehmer angeschlossen. Die Visco-Kupplung befand sich in einem auf 75° C thermostatisierten Bad. Dauer der Versuche: jeweils 60 min. Folgende Ergebnisse wurden nach dieser Zeit erzielt:

Tab. 2:

| Siliconöltype | Viskositätsabfall | Drehmomentabfall |
|---|---|---|
| A | 48,5 % | 35,0 % |
| A stabilisiert (Beispiel 1) | 15,4 % | 12,6 % |
| D | 12,4 % | 11,3 % |
| D stabilisiert (Beispiel 4) | 6,9 % | 5,5 % |

**Ansprüche**

1. Verfahren zum Stabilisieren von in den endständigen Einheiten Triorganosiloxy-Gruppen enthaltenden Organopolysiloxanölen,
**dadurch gekennzeichnet,**
daß die genannten Organopolysiloxanöle mit Verbindungen der Formel
$R'_3$ SiX oder $(R'_3\ Si)_2Y$
in Kontakt gebracht werden, wobei in den obigen Formeln
R' gleiche oder verschiedene, gegebenenfalls halogenierte Kohlenwasserstoffreste mit 1 bis 18 Kohlenstoffatomen;
X ein Halogenatom, ein Wasserstoffatom, eine Hydroxylgruppe oder ein über ein Sauerstoff-oder Stickstoffatom an das Siliciumatom gebundener einwertiger, aus Stickstoff-, Wasserstoff-, Sauerstoff-und 0 bis 6 Kohlenstoffatomen aufgebauter Rest;
Y einen zweiwertigen Rest, nämlich ein Sauerstoffatom, eine Gruppe der Formel NH oder NR", oder ein über Sauerstoff-und/oder Stickstoffatome an die beiden Siliciumatome gebundener zweiwertiger, aus Stickstoff-, Wasserstoff-, Sauerstoff-und 0 bis 6 Kohlenstoffatomen aufgebauter Rest;
R" einen Kohlenwasserstoffrest mit 1 bis 8 Kohlenstoffatomen bedeuten.

2. Verfahren nach Anspruch 1,
**dadurch gekennzeichnet,**
daß das darin eingesetzte, in den endständigen Einheiten Triorganosiloxy-Gruppen enthaltende Organopolysiloxanöl dasjenige der Formel

$$R_3Si-O-\left[\begin{matrix} R \\ | \\ -Si-O- \\ | \\ R \end{matrix}\right]_n-SiR_3$$

ist, worin R die in Anspruch 1 für R' angegebene Bedeutung hat, und n eine ganze Zahl von 1 bis 3000 ist.

3. Verfahren nach Anspruch 1,
**dadurch gekennzeichnet,**
daß das darin eingesetzte, in den endständigen Einheiten Triorganosiloxy-Gruppen enthaltende Organopolysiloxanöl dasjenige der Formel

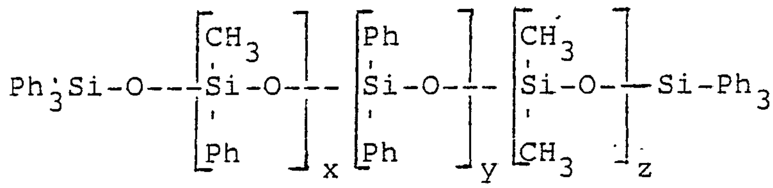

ist, worin Ph für einen Phenylrest steht, und x, y und z jeweils ganze Zahlen von 0 bis 3000 sind.

4. Verfahren nach Anspruch 1, 2 oder 3,
**dadurch gekennzeichnet,** daß die eingesetzten Verbindungen der Formeln
$R'_3$ SiX oder $(R'_3$ $Si)_2Y$
solche sind, in denen R′ gleiche oder verschiedene Methyl-oder Phenylreste sind.

5. Verfahren nach Anspruch 1, 2 oder 3,
**dadurch gekennzeichnet,**
daß als Verbindung der Formel
$R'_3$ SiX oder $(R'_3$ $Si)_2Y$
Hexamethyldisilazan eingesetzt wird.

6. Verfahren nach Anspruch 1, 2, 3, 4 oder 5,
**dadurch gekennzeichnet,**
daß es bei Temperaturen von 20 bis 200 °C durchgeführt wird.

7. Verwendung der nach den Verfahren der Ansprüche 1, 2, 3, 4, 5 oder 6 stabilisierten Organopolysiloxanöle als Kraftübertragungsöle, insbesondere in Visco-Kupplungen.